(19) Europäisches Patentamt
European Patent Office
Office européen des brevets

(11) **EP 3 636 607 B1**

(12) **EUROPÄISCHE PATENTSCHRIFT**

(45) Veröffentlichungstag und Bekanntmachung des Hinweises auf die Patenterteilung:
**13.01.2021 Patentblatt 2021/02**

(51) Int Cl.:
***C03B 37/012*** *(2006.01)*      ***C03B 23/047*** *(2006.01)*
***G02B 6/036*** *(2006.01)*

(21) Anmeldenummer: **18199287.6**

(22) Anmeldetag: **09.10.2018**

(54) **VERFAHREN ZUR HERSTELLUNG EINES KAPILLARROHRES**

METHOD FOR MANUFACTURING A CAPILLARY TUBE

PROCÉDÉ DE FABRICATION D'UN TUBE CAPILLAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.04.2020 Patentblatt 2020/16**

(73) Patentinhaber: **Heraeus Quarzglas GmbH & Co. KG**
**63450 Hanau (DE)**

(72) Erfinder:
• **WEIDLICH, Stefan**
  **55116 Mainz (DE)**
• **SCHMITT, Clemens**
  **63825 Blankenbach (DE)**
• **WERNER, Jörg**
  **63674 Altenstadt (DE)**

(74) Vertreter: **Staudt, Armin Walter**
**Sandeldamm 24a**
**63450 Hanau (DE)**

(56) Entgegenhaltungen:
**EP-A2- 1 884 808      JP-A- H 038 733**
**JP-A- H04 342 430      JP-A- H08 157 227**

**Beschreibung**

Technischer Hintergrund

Die Erfindung betrifft ein Verfahren zur Herstellung eines Kapillarrohres aus Glas, umfassend einen Verfahrensschritt, bei dem eine rohrförmige Vorform mit einem Außendurchmesser $D_{OD}$, einem Innendurchmesser $D_{ID}$ und einem Durchmesserverhältnis $D_{rel}$ - mit $D_{rel} = D_{OD}/D_{ID}$ - in einer auf eine Zieh-Temperatur $T_{draw}$ aufgeheizten Heizzone zonenweise erweicht und aus dem erweichten Bereich mit einer Ziehgeschwindigkeit $v_{draw}$ kontinuierlich ein Kapillarstrang mit einem Außendurchmesser $d_{OD}$, einem Innendurchmesser $d_{ID}$ und einem Durchmesserverhältnis $d_{rel}$ - mit $d_{rel} = d_{OD}/d_{ID}$ - abgezogen und daraus das Kapillarrohr abgelängt wird.
Derartige Kapillarrohre zeichnen sich durch einen geringen Innendurchmesser von beispielsweise weniger als 5 $\mu$m aus.

Stand der Technik

Die Herstellung von Kapillarrohren erfolgt beispielsweise durch Ziehen eines Kapillarstrangs aus einer Glasschmelze oder - bei höheren Anforderungen an die Maßhaltigkeit - durch Ziehen (Elongieren) eines rohrförmigen Halbzeugs wie beispielsweise einer Glas-Vorform oder einer koaxialen Anordnung von Glasbauteilen. Die Begriffe "Kapillarstrang" und "Kapillarfaser" werden hier als Äquivalent verwendet. Aus dem "Kapillarstrang" der "Kapillarfaser" werden Kapillarrohre oder auch Kapillarfasern abgelängt.
Ein Vorteil dieser Ziehverfahren ist, dass ein Kapillarstrang großer Länge erhalten wird, aus dem eine Vielzahl von Kapillarrohren abgelängt werden kann. Für manche Anwendungen sind besonders dickwandige Kapillarrohre vorteilhaft, beispielsweise wenn es auf Formstabilität und mechanische Festigkeit des Kapillarrohres ankommt.
Die Herstellung besonders dickwandiger Kapillarrohre erfolgt gemäß der EP-A1 259 877 durch Anordnen mehrerer Glasrohre mit unterschiedlichen Durchmessern ineinander, wobei die einzelnen Innen- und Außendurchmesser dieser Glasrohre aneinander angepasst sind. Das koaxiale Ensemble der Glasrohre wird erhitzt und die einzelnen Rohre werden miteinander unter Elongieren verschmolzen. Dieses Verfahren erfordert einen hohen Aufwand für die präzise Fertigung und Halterung der Glasrohre, um ein homogenes Verschmelzen der Rohre miteinander und eine gleichmäßige Kapillarbohrung zu erzielen.
Das Verhältnis von Innendurchmesser zu Außendurchmesser, das auch kurz als "Durchmesserverhältnis" bezeichnet wird, ist in der Regel bereits im Halbzeug angelegt, aus dem die Kapillare gezogen wird. Das heißt, der Kapillarstrang zeigt das gleiche Durchmesserverhältnis wie die Vorform beziehungsweise das koaxiale Ensemble der ineinandergesteckten Rohre, aus dem er gezogen wird. Man spricht in diesen Fällen auch von einem "Verhältniszug".
Um eine Kapillare zu erzeugen, die ein größeres Durchmesserverhältnis hat als das Halbzeug, schlägt die DE 198 56 892 C2 vor, dass beim Ziehprozess in der Kapillarbohrung ein Unterdruck gegenüber dem außen anliegenden Druck erzeugt und aufrechterhalten wird. Auf diese Weise wird durch Elongieren eines Quarzglas-Hohlzylinders ein Rohrstrang erzeugt, bei dem das Durchmesserverhältnis bei einem Ausführungsbeispiel um den Faktor 1,185 und bei einem anderen Ausführungsbeispiel um den Faktor 1,344 größer ist als beim Ausgangs-Hohlzylinder.
Aus der WO 2014/141168 A1 ist es bekannt, dass Hohlräume in Glas durch Bestrahlung mit hochenergetischen Teilchen, wie Photonen oder Ionen, schrumpfen.
Die JP H08 157227 A beschreibt ein Verfahren zur Herstellung eines Kapillarrohres mit sehr kleinem Innendurchmesser zwecks Befüllen mit einem Medium, das den Kerr-Effekt zeigt. Die Kapillarrohre werden durch Elongieren einer Vorform erhalten. Die Vorform wird aus einem niedrigschmelzenden Blei- oder Phosphatglas aus der Schmelze extrudiert.
Aus der EP 1 884 808 A2 sind Designs für optische Glasfasern bekannt, die das Problem der selbstinduzierten Schädigung durch Selbstfokussierung überwinden. Der Brechungsindex dieser Faserdesigns ist im mittleren Kern der Glasfaser grob ungleichmäßig. In einer Ausführungsform ist die Glasfaser mit einem bewussten und steilen Kerngraben ausgeführt. Darüber hinaus weist der nominale Kernbereich dieser Glasfasern eine sehr große Fläche auf. Die Kombination dieser beiden Eigenschaften beschränkt einen großen Teil der optischen Leistungshülle auf einen Kernring mit reduzierter optischer Leistung im Kernring, wo die optische Intensität am höchsten ist. Da eine hohe optische Intensität den lokalen Brechungsindex erhöht, dient der Kernring als Pseudokern, in dem der Großteil des Lichts geführt wird und der das Eindringen optischer Energie in die Mitte des Kerns weiter verhindert.
Die JP H04 342430 A beschreibt die Herstellung eines Kapillarrohres aus Quarzglas, bei dem der Innendurchmesser zwischen 0.5 und 6.0 $\mu$m und der Außendurchmesser das 600 bis 2000-fache des Innendurchmessers beträgt. Dabei wird eine stabförmige Glasvorform von einem Ende aus mit einem zentralen Längsloch versehen, das mit einem von der Außenmantelfläche ausgehenden Querloch in Verbindung steht. Beim Elongieren wird Luft über das Querloch in das Längsloch eingeleitet.
Die JP H03 8733 A beschreibt die Herstellung einer Quarzglas-Kapillare mit gleichmäßigen Innen- und Außendurchmessern. Dabei wird ein Ausgangs-Quarzglasrohr zu einer Kapillare mit konstantem Außendurchmesser elongiert und auf eine Wickelrolle gewickelt, wobei eine vertikale Kraft von einer Wägezelle gemessen wird. Der dabei berechnete Innendurchmesser der Kapillare wird zur Steuerung der Erwärmungstemperatur oder der Ziehgeschwindigkeit der Kapillare eingesetzt.

Technische Aufgabenstellung

Je kleiner die Kapillarbohrung ist, umso höher sind die Anforderungen an die Maßhaltigkeit beim Halbzeug. Bei Kapillarrohren mit einem geringen Bohrungs-Innendurchmesser von beispielsweise 2 $\mu$m sind die Anforderungen an die Maßhaltigkeit des Halbzeugs bereits sehr hoch, insbesondere wenn gleichzeitig ein hohes Durchmesserverhältnis von beispielsweise mehr als 100 angestrebt wird, wobei derartige Kapillarrohre im Folgenden auch als "dickwandig" bezeichnet werden. Bei der Herstellung von dickwandigen Kapillarrohren mit noch kleineren Innenbohrungen von beispielsweise weniger als 1 $\mu$m stoßen die bekannten Verfahren und Hilfsmaßnahmen an Grenzen, besonders bei hohen Anforderungen an die Qualität und Maßhaltigkeit der Kapillarbohrung.

Der Erfindung liegt daher die Aufgabe zugrunde, ein Verfahren anzugeben, das die kostengünstige Herstellung einer dickwandigen Kapillare durch Ziehen aus einer Vorform ohne hohe Anforderungen an die Geometrie und Maßhaltigkeit der Vorform ermöglicht.

Zusammenfassung der Erfindung

Diese Aufgabe wird ausgehend von einem Verfahren der eingangs genannten Gattung erfindungsgemäß dadurch gelöst, dass die Kapillarbohrung in der Heizzone einem auf Einwirkung von Zieh-Temperatur $T_{draw}$ und Oberflächenspannung basierenden Schrumpfungsvorgang unterzogen wird, derart, dass sich das Durchmesserverhältnis $d_{rel}$ des Kapillarstrangs auf einen Wert einstellt, der um mindestens den Faktor 5 größer ist das Durchmesserverhältnis $D_{rel}$ der Vorform, wobei als Vorform eine Multimode-Lichtleitfaservorform oder eine Singlemode-Lichtleitfaservorform mit einem eine Innenbohrung umgebenden Vorformkern und einem den Vorformkern umhüllenden Vorformmantel eingesetzt wird, und daraus ein Kapillarstrang gezogen wird, der einen eine Kapillarbohrung umgebenden Kapillarkern und einen den Kapillarkern umhüllenden Kapillarmantel aufweist.

Bei den bekannten Ziehverfahren beruht die Einstellung der Geometrie der Kapillarbohrung im Wesentlichen auf den Vorgaben seitens der Vorform und der Wahl der Drücke innerhalb und außerhalb der Kapillarbohrung beim Ziehprozess. Im Gegensatz dazu ist beim erfindungsgemäßen Verfahren die Einstellung von Innendurchmesser und Durchmesserverhältnis der Kapillare im Wesentlichen unabhängig von der Vorform und von Drücken innerhalb und außerhalb der Kapillarbohrung, sondern sie beruht maßgeblich auf der Wirkung der Oberflächenspannung auf die Kapillarbohrung in der heißesten Zone beim Ziehprozess. Denn die Kapillarbohrung schrumpft unter Wirkung der Oberflächenspannung beim Ziehprozess, wobei der unter Einwirkung der Oberflächenspannung hervorgerufene Schrumpfungsgrad von der Viskosität des Glases im Bereich der Kapillarbohrung abhängt. Je niedriger die Viskosität ist und je länger die Oberflächenspannung ihre schrumpfende Wirkung auf ein niedrig-viskoses Glas entfalten kann, umso bestimmender ist sie dafür, welche Größe und Form der Kapillarbohrung sich in der Heizzone einstellen.

Die Oberflächenspannung wirkt zwangsläufig auch bei den bekannten Ziehverfahren, jedoch wird der Grad der durch sie bewirkten Schrumpfung begrenzt und überlagert durch andere Wirkmechanismen, wie Druck oder Ziehkräfte, die bei den bekannten Ziehverfahren maßgeblich bestimmend für die Einstellung der Geometrie der Kapillarbohrung sind, aber nicht die Oberflächenspannung.

Die Viskosität in der Heizzone stellt sich durch ein komplexes Zusammenspiel insbesondere der Ziehtemperatur - diese ist vergleichsweise hoch - und der Ziehgeschwindigkeit - diese ist vergleichsweise niedrig - ein. Durch vorsichtig herantastendes Erhöhen der Ziehtemperatur und/oder Verringern der Ziehgeschwindigkeit kann der Fachmann den auf Wirkung der Oberflächenspannung beim Ziehprozess beruhenden Grad der Schrumpfung erhöhen.

Indem sich beim Faserziehprozess der Innendurchmesser der Kapillarbohrung durch maßgebliche Wirkung von Oberflächenspannung stärker verkleinert als in einem reinen Verhältniszug, vergrößert sich das Durchmesserverhältnis $d_{rel}$. Als Maß dafür, dass die Viskosität im Bereich der Heizzone derart ist, dass die Oberflächenspannung maßgeblich bestimmend für die Einstellung der Geometrie der Kapillarbohrung ist, wird im Rahmen dieser Erfindung erachtet, dass das Durchmesserverhältnis $d_{rel}$ des Kapillarstrangs auf einen Wert einstellbar ist, der um mindestens den Faktor 5 größer ist als das Durchmesserverhältnis $D_{rel}$ der Vorform. Denn dieser deutliche Unterschied der Durchmesserverhältnisse von Vorform und Kapillare wäre ohne die maßgebliche Wirkung von Oberflächenspannung ohne besondere andere Maßnahmen kaum erreichbar. Die Wirkung der Oberflächenspannung auf die Einstellung des Innendurchmessers der Kapillarbohrung ist umso entscheidender, je größer das Verhältnis $d_{rel}/Drel$ ist, so dass dieses Verhältnis vorteilhafterweise mindestens 10, vorzugsweise mindestens 20 und besonders bevorzugt mindestens 50 beträgt.

Bei der Erfindung wird die Geometrie der Kapillarbohrung maßgeblich durch die Wirkung der Oberflächenspannung eingestellt, so dass die Bedeutung anderer Parameter in den Hintergrund tritt, die ansonsten als entscheidend für die Einstellung der Geometrie der Kapillarbohrung erachtet werden, wie beispielsweise die Druckdifferenz zwischen den Drücken innerhalb und außerhalb der Kapillarbohrung und die geometrischen Vorgaben seitens der Vorform. Insbesondere ergeben sich dadurch vergleichsweise geringere Anforderungen an die Maßhaltigkeit der Vorform, so dass das Herstellungsverfahren auch für dickwandige Kapillarrohre mit kleiner Kapillarbohrung kostengünstig gestaltet werden kann. Die Herstellung der Kapillarrohre durch Ziehen aus einer Vorform ermöglicht die kostengünstige Fertigung gleicher Kapillargrößen in großer Menge.

Besonders vorteilhaft ist dieses Verfahren einsetzbar, wenn das Kapillarrohr über seinen Radius einen inhomogenen Verlauf des Brechungsindex aufweist. Denn der radial inhomogene Brechungsindex-Verlauf bewirkt beim Ziehprozess einen gleichermaßen radial inhomogenen Verlauf der Viskosität, was die Einstellung eines vorgegebenen Kapillarbohrungs-Durchmessers erschweren kann. Diese Schwierigkeit kann durch den Einsatz des erfindungsgemäßen Verfahrens minimiert werden. Daher ist erfindungsgemäß vorgesehen, dass als Vorform eine Multimode-Lichtleitfaservorform oder eine Singlemode-Lichtleitfaservorform mit einem eine Innenbohrung umgebenden Vorformkern und einem den Vorformkern umhüllenden Vorformmantel eingesetzt wird, und daraus ein Kapillarstrang gezogen wird, der einen eine Kapillarbohrung umgebenden Kapillarkern und einen den Kapillarkern umhüllenden Kapillarmantel aufweist.

Bei einer bevorzugten Ausgestaltung des Verfahrens bildet der Kapillarkern eine radiale Querschnittsfläche $CSA_{KK}$ und der Kapillarmantel eine radiale Querschnittsfläche $CSA_{KM}$, wobei eine Vorform eingesetzt wird, bei der der Vorformkern eine radiale Querschnittsfläche $CSA_{VK}$ und der Vorformmantel eine radiale Querschnittsfläche $CSA_{VM}$ aufweist, wobei für die jeweiligen Querschnittsflächenverhältnisse von Mantel und Kern gilt: $CSA_{KM}/CSA_{KK} = CSA_{VM}/CSA_{VK}$.

Der Kapillarkern hat eine andere chemische Zusammensetzung als der Kapillarmantel. Besteht der Kern aus Quarzglas, so ist er beispielsweise mit einer den Brechungsindex von Quarzglas erhöhenden Substanz dotiert, wie beispielsweise Germanium. In dem Fall kann der Mantel aus undotiertem Quarzglas bestehen oder mit einer den Brechungsindex von Quarzglas verringernden Substanz dotiert sein. Bei dieser Verfahrensvariante der Erfindung wird nicht - wie sonst bei einem Verhältniszug üblich - das Verhältnis der Radien von Kern- und Mantelbereich in der Vorform auf den Zielwert im Kapillarrohr eingestellt, sondern es wird das Querschnittsverhältnis der beiden Bereiche, das Verhältnis der jeweiligen sogenannten "Cross-Sectional-Area" (CSA) in der Vorform auf den Zielwert in der Kapillare gestellt. Das heißt, das CSA-Verhältnis in der Vorform ist identisch mit dem CSA-Verhältnis in der Kapillare.

Beim Ziehen des Kapillarstrangs wird der vorgegebene Durchmesser der Kapillarbohrung eingestellt, so dass sich auch das entsprechend gewünschte Verhältnis von Außendurchmesser zu Innendurchmesser des Kapillarrohres und damit das gewünschte Verhältnis von Außendurchmesser zu Durchmesser des Kernbereichs und damit das CSA-Verhältnis automatisch ergeben.

Bei dieser Verfahrensvariante wird das Verhältnis der jeweiligen CSA-Bereiche voreingestellt, und nicht - wie beim Verhältniszug - das Durchmesserverhältnis. Der Vorteil ist dabei, dass sich CSA-Werte vorab sehr genau aufbauen lassen, die Durchmesser (beziehungsweise Radien) jedoch erst im Faserziehprozess entsprechend genau getroffen werden müssen.

Das oben erwähnte Herantasten zwecks Einstellung des gewünschten Einwirkungsgrades der Oberflächenspannung beim Ziehprozess erfolgt bei einer bevorzugten Verfahrensvariante durch vorsichtiges Erhöhen der Zieh-Temperatur, bis die eigentliche Ziehtemperatur $T_{draw}$ erreicht ist. Dabei wird die Zieh-Temperatur $T_{draw}$ in einem iterativen Prozess ermittelt, bei der eine Verkleinerung der Kapillarbohrung nicht ausschließlich auf Elongieren der Vorform beruht, sondern bei der eine Schrumpfung infolge von Oberflächenspannung einsetzt und den gewünschten Beitrag zur Verkleinerung bewirk. Der iterative Prozess umfasst vorzugsweise folgende Verfahrensschritte:

(a) Die Heizzone wird auf eine Temperatur $T_1$ aufgeheizt, wobei gilt: $T_1 < T_{draw}$.

(b) Mit der auf Temperatur $T_1$ aufgeheizten Heizzone wird ein Kapillar-Teilstrang gezogen.

(c) Der Durchmesser der Kapillarbohrung des Kapillar-Teilstrangs wird ermittelt und es wird sichergestellt, dass er größer ist als ein Soll-Innendurchmesser der Kapillarbohrung.

(d) Die Temperatur der Heizzone wird von $T_1$ auf eine Zieh-Temperatur $T_2$ erhöht, und mit der auf die Zieh-Temperatur $T_2$ aufgeheizten Heizzone wird ein weiterer Kapillar-Teilstrang gezogen.

(e) Der Durchmesser der Kapillarbohrung des weiteren Kapillar-Teilstrangs wird ermittelt und es wird festgestellt, ob der Durchmesser innerhalb eines tolerierbaren Schwankungsbereichs um den Soll-Innendurchmesser liegt.

(f) Liegt der Durchmesser der Kapillarbohrung innerhalb des Schwankungsbereichs um den Soll-Innendurchmesser, so gilt: $T_2 = T_{draw}$; ist der Durchmesser der Kapillarbohrung größer als der Soll-Innendurchmesser inklusive des tolerierbaren Schwankungsbereichs, so gilt: $T_2 < T_{draw}$ und der iterative Prozess wird mit der Maßgabe $T_1 = T_2$ bei

Verfahrensschritt (d) fortgeführt; ist der Durchmesser der Kapillarbohrung kleiner als der Soll-Innendurchmesser inklusive des Schwankungsbereichs, so gilt: $T_{2>}T_{draw}$ und der iterative Prozess wird bei Verfahrensschritt (a) fortgeführt.

Die Ziehtemperatur $T_{draw}$ ist diejenige Temperatur, die bei ansonsten unveränderten Ziehparametern eine so geringe Viskosität im Bereich der Heizzone bewirkt, dass der gewünschte Einwirkungsgrad der Oberflächenspannung, also ein ausreichendes Schrumpfen der Kapillarbohrung erreicht wird.

Damit ein iteratives Herantasten von niedriger Temperatur ausgehend an $T_{draw}$ ermöglicht wird, ist bei Verfahrensschritt (a) eine Starttemperatur $T_1$ zu wählen, die niedriger ist als $T_{draw}$, so dass das Schrumpfen der Kapillarbohrung zunächst nicht hinreichend stattfindet; beziehungsweise eine Kapillarbohrung erhalten bleibt und nicht vollständig kollabiert. Dieser Sachverhalt wird im Verfahrensschritt (b) überprüft, wobei der Soll-Innendurchmesser der Kapillarbohrung mit dem der Messwert verglichen wird, dem oben als $d_{ID}$ bezeichneten Wert entspricht.

Im einfachsten Fall ist bekannt, dass $T_1$ niedriger ist als $T_{draw}$, andernfalls ist ein Herantasten beginnend mit einer ausreichend niedrigen Start-Temperatur erforderlich.

Im folgenden Verfahrensschritt wird die Temperatur der Heizzone von $T_1$ auf eine höhere Zieh-Temperatur $T_2$ gebracht, und es wird erneut an einem mit der Ziehtemperatur $T_2$ gezogenen Kapillar-Teilstrang überprüft, ob der Durchmesser der Kapillarbohrung nun innerhalb eines tolerierbaren Schwankungsbereichs um den Soll-Innendurchmesser liegt. Gegebenenfalls ist der Temperaturwert $T_{draw}$ gefunden, anhand dem der Rest der Vorform zu dem Kapillarstrang gezogen werden kann.

Andernfalls - im Fall $T_{2<}T_{draw}$ - wird der iterative Prozess bei Verfahrensschritt (d) fortgesetzt. Formal wird in der Nomenklatur von Verfahrensschritt (d) die Temperatur $T_2$ als $T_1$ betrachtet und die Ziehtemperatur der Heizzone um einen weiteren Temperaturbetrag erhöht.

Andernfalls - im Fall $T_{2>}T_{draw}$ - wird eine Kapillarbohrung erhalten, die zu klein ist oder die vollständig kollabiert ist. In dem Fall wurde bei dieser Versuchsreihe der Temperaturwert $T_{draw}$ nicht gefunden, und sie ist daher beginnend mit Verfahrensschritt (a) mit anderen Temperaturwerten zu wiederholen.

Es hat sich gezeigt, dass beim erläuterten iterativen Einstellprozess bereits Temperaturunterschiede zwischen $T_1$ und $T_2$ im Bereich weniger Grade einen merklichen Einfluss auf den Durchmesser der Kapillarbohrung haben können.

Mittels des beschriebenen iterativen Einstellprozesses ist die optimale Ziehtemperatur für jede Vorform unter Beibehaltung der übrigen Zieh-Parameter auffindbar. Vorformen können sich beispielsweise hinsichtlich Wärmeleitfähigkeit und Wärmekapazität voneinander unterscheiden, so dass der iterative Einstellprozess individuell vorgenommen werden muss. Um diesen Aufwand zu minimieren, können die individuellen Vorformen so konditioniert werden, dass sie sich in ihren Wärmeleitfähigkeits- und Wärmekapazitätswerten möglichst nicht unterscheiden. Eine dafür geeignete Maßnahme ist beispielsweise das Abschleifen der Vorformen einer Charge auf gleiches Endmaß.

Da der iterative Einstellprozess für die Ziehtemperatur auf Temperaturdifferenzen beruht und im realen Ziehprozess erfolgt, ist der Ort der Temperatureinstellung und -messung nicht erheblich. So können die Ziehtemperatur $T_{draw}$ beziehungsweise die Zwischenwerte $T_1$ und $T_2$ zum Beispiel in der Heizzone - wie etwa an einem Heizelement - oder am Kapillarrohr eingestellt und gemessen werden.

Das Ermitteln des Durchmessers der Kapillarbohrung anhand der Verfahrensschritte (c) und (e) erfolgt vorzugsweise während des Ziehens des Kapillarstrangs beziehungsweise während des Ziehens des "weiteren Kapillarstrangs". Vorteilhafterweise durchläuft der Kapillarstrang dabei eine optisch-mikroskopische Einrichtung, mittels der der Durchmesser der Kapillarbohrung online erfassbar ist. Alternativ dazu und gleichermaßen bevorzugt wird eine Messprobe aus dem aktuellen Teilstrang entnommen und möglichst rasch mikroskopisch untersucht, um den Durchmesser der Kapillarbohrung zu ermitteln, während das Ziehen des aktuellen Teilstrangs fortgesetzt wird.

Der beschriebene iterative Einstellprozess für die optimale Ziehtemperatur kann in analoger Weise auch zur Einstellung der optimalen Ziehgeschwindigkeit für jede Vorform unter Beibehaltung der Ziehtemperatur $T_{draw}$ angepasst werden. Dabei wird ein iteratives Herantasten ausgehend von einer anfänglich zu hohen Ziehgeschwindigkeit $v_1$, bei der ein Schrumpfen der Kapillarbohrung zunächst nicht hinreichend stattfindet, durch sukzessive Reduzierung bis zum Erreichen der optimalen Ziehgeschwindigkeit $v_{draw}$ ermöglicht. Dabei wird bei konstanter Temperatur der Heizzone $T_{draw}$ in einem iterativen Prozess diejenige Ziehgeschwindigkeit $v_{draw}$ ermittelt, die gewährleistet, dass das Glas der hohen Temperatur der Heizzone so lange ausgesetzt ist und eine so geringe Viskosität annimmt, dass eine Verkleinerung der Kapillarbohrung nicht ausschließlich auf Elongieren der Vorform beruht, sondern die Oberflächenspannung zur Schrumpfung der Kapillarbohrung maßgeblich beiträgt. Dieser iterative Prozess umfasst die folgenden Verfahrensschritte:

(a) Die Ziehgeschwindigkeit wird auf einen Wert $v_1$ eingestellt, für den gilt: $v_1 > v_{draw}$.

(b) Mit der Ziehgeschwindigkeit $v_1$ wird ein Kapillar-Teilstrang gezogen.

(c) Der Durchmesser der Kapillarbohrung des Kapillar-Teilstrangs wird ermittelt und es wird sichergestellt, dass er größer ist als ein Soll-Innendurchmesser der Kapillarbohrung.

(d) Die Ziehgeschwindigkeit wird von $v_1$ auf eine Ziehgeschwindigkeit $v_2$ verringert, und mit der verringerten Ziehgeschwindigkeit $v_2$ wird ein weiterer Kapillar-Teilstrang gezogen.

(e) Der Durchmesser der Kapillarbohrung des weiteren Kapillar-Teilstrangs wird ermittelt und es wird festgestellt, ob der Durchmesser innerhalb eines tolerierbaren Schwankungsbereichs um den Soll-Innendurchmesser liegt.

(f) Liegt der Durchmesser der Kapillarbohrung innerhalb des Schwankungsbereichs um den Soll-Innendurchmesser, so gilt: $v_2 = v_{draw}$; ist der Durchmesser der Kapillarbohrung größer als der Soll-Innendurchmesser inklusive des tolerierbaren Schwankungsbereichs, so gilt: $v_2 > v_{draw}$ und der iterative Prozess wird mit der Maßgabe $v_1 = v_2$ bei Verfahrensschritt (d) fortgeführt; ist der Durchmesser der Kapillarbohrung kleiner als der Soll-Innendurchmesser inklusive des Schwankungsbereichs, so gilt: $v_2 < v_{draw}$ und der iterative Prozess wird bei Verfahrensschritt (a) fortgeführt.

Als geeigneter Anhaltspunkt für die Ziehgeschwindigkeit $v_{draw}$ kann von einem Wert im Bereich von 5 bis 100 m/min ausgegangen werden.

Insbesondere im Hinblick auf ein kostengünstiges Fertigungsverfahren wird eine Verfahrensweise bevorzugt, bei der der Kapillarstrang mit einem vergleichsweise hohen Elongierverhältnis im Bereich von 900 bis 200.000 aus der Vorform abgezogen wird.

Das Elongierverhältnis berechnet sich hierbei als Verhältnis der Längen von Vorform und Kapillarstrang.

Die im Folgenden genannten geometrischen Parameterbereiche haben sich für die zu elongierende Vorform und für den daraus nach dem erfindungsgemäßen Verfahren erhaltenen Kapillarstrang als besonders vorteilhaft erwiesen:

$$D_{OD} \quad > \quad 15\,\text{mm}$$

$$D_{ID} \quad > \quad 1\,\text{mm}$$

$$D_{rel} \quad < \quad 30$$

$$d_{OD} \quad > \quad 100\,\mu\text{m}$$

$$d_{ID} \quad < \quad 1\,\mu\text{m}$$

$$d_{rel} \quad > \quad 100$$

Dabei gilt für den Kapillarstrang insbesondere:

$$100\,\mu\text{m} \quad < \quad d_{OD} \quad < \quad 500\,\mu\text{m},$$

$$0{,}1\,\mu\text{m} \quad < \quad d_{ID} \quad < \quad 1\,\mu\text{m}$$

und

$$100 \quad < \quad d_{rel} \quad < \quad 5.000.$$

Dabei gilt für die Vorform insbesondere:

$$15 \, \text{mm} \quad < \quad D_{OD} \quad < \quad 45 \, \text{mm},$$

$$1 \, \text{mm} \quad < \quad D_{ID} \quad < \quad 5 \, \text{mm}$$

und

$$3 \quad < \quad D_{rel} \quad < \quad 30.$$

Dabei gilt für die Vorform und den Kapillarstrang insbesondere:

$$2.000 \quad < \quad DID/dID \quad < 50.000$$

$$d_{rel}/D_{rel} \quad > \quad 10, \text{bevorzugt} > 20 \text{ und insbesondere} > 50$$

und

$$d_{rel}/D_{rel} \quad < \quad 300.$$

Wie oben erläutert, ist das Verhältnis $d_{rel}/D_{rel}$ als Kriterium für die Maßgeblichkeit der Wirkung von Oberflächenspannung auf die Einstellung der Kapillarbohrung geeignet. Je größer der Verhältniswert ist, umso größer ist in der Regel der auf Wirkung der Oberflächenspannung beruhende Anteil an der Einstellung der Kapillarbohrung. Im Hinblick darauf beträgt der Verhältniswert $d_{rel}/D_{rel}$ mindestens 5, vorzugsweise mindestens 10, besonders bevorzugt mindestens 20 und noch besser mindestens 50. Darüber hinaus repräsentiert der Verhältniswert $d_{rel}/D_{rel}$ auch einen besonderen technischen Vorteil der Erfindung, der wie oben erläutert darin besteht, dass anders als beim sogenannten "Verhältniszug", der eine feste Korrelation zwischen den radialen Abmessungen von Vorform und Kapillare vorgibt, der erfindungsgemäße Kapillar-Ziehprozess eine weitgehend von den radialen Abmessungen der Vorform unabhängige Einstellung von Wandstärke und Durchmesser der Kapillarbohrung ermöglicht. Dies vereinfacht zum einen die Herstellung der hohlzylindrischen Vorform, bei der beispielsweise die Erzeugung einer sehr kleinen Innenbohrung und/oder eines sehr großen Außendurchmessers nicht erforderlich sind, und es ermöglicht das Ziehen von Kapillaren mit unterschiedlicher Geometrie aus gleich großen Vorformen. Hohe Verhältniswerte $d_{rel}/D_{rel}$ von mehr als 300 repräsentieren Kapillar-Ziehprozesse mit einer besonders starken Umformung der ursprünglichen Vorform-Wandung durch Schrumpfung der Kapillarbohrung.

Im Hinblick auf eine homogene Erwärmung des Glases hat es sich als günstig erwiesen, wenn die Heizzone in einem Rohrofen ausgebildet ist, der einen kreisrunden Heiz-Innenraum aufweist.

Das Kapillarrohr besteht aus Glas, insbesondere aus Quarzglas, und es hat einen Außendurchmesser $d_{OD}$ und einen Innendurchmesser $d_{ID}$ und weist folgende geometrische Abmessungen auf:

$$100 \, \mu\text{m} \quad < \quad d_{OD} \quad < \quad 500 \, \mu\text{m},$$

$$0{,}1 \, \mu\text{m} \quad < \quad d_{ID} \quad < \quad 1 \, \mu\text{m}$$

und

$$100 \quad < \quad d_{rel} \quad < \quad 5000, \text{mit } d_{rel} = d_{OD}/d_{ID}.$$

Das Kapillarrohr wird durch Ablängen eines Kapillarstrangs erhalten, der nach dem erfindungsgemäßen Verfahren erzeugt worden ist. Es zeichnet sich durch Dickwandigkeit und eine hohe Qualität der Kapillarbohrung aus.

Ausführungsbeispiele

Nachfolgend wird die Erfindung anhand von Ausführungsbeispielen und einer Zeichnung näher erläutert. Im Einzelnen zeigt

Figur 1    ein Diagramm zur Erläuterung des Zusammenhangs der Schrumpfung der Kapillarbohrung beim Faserziehprozess in Abhängigkeit von der Ziehtemperatur,

Figur 2    eine Ausführungsform einer Glas-Kapillare in einer Draufsicht auf eine Stirnseite in schematischer Darstellung,

Figur 3    ein Diagramm zum Schrumpfungsverhalten der Kapillarbohrung der Kapillare gemäß Figur 2 in Abhängigkeit von der Ziehtemperatur,

Figur 4    eine rasterelektronische Aufnahme der Kapillare in einem frühen Verfahrensstadium des Faserziehprozesses,

Figur 5    eine rasterelektronische Aufnahme der Kapillare von Figur 4 in einer höheren Vergrößerung, und

Figur 6    eine rasterelektronische Aufnahme einer Kapillare nach Abschluss des Faserziehprozesses.

Kapillarfasern werden üblicherweise in einem sogenannten "Verhältniszug" hergestellt. Das bedeutet, dass das geometrische Verhältnis von Außen- zu Innendurchmesser bereits im Halbzeug (der Vorform) vorgegeben ist und zwar entsprechend dem gewünschten Verhältnis in der Kapillarfaser, die aus dem Halbzeug durch thermische Erhitzung gezogen wird. Dieses Verhältnis kann für übliche Innendurchmesser von Kapillarfasern bereits in der Vorform mit hinreichender Genauigkeit für den Kapillarfaserzug gefertigt werden. Für Geometriewerte, bei denen in der Kapillarfaser ein sehr geringer Innendurchmesser von weniger als etwa 2 μm erreicht werden soll, ergeben sich jedoch hohe Anforderungen an die notwendige Fertigungstoleranz der Vorform.

Beim erfindungsgemäßen Verfahren ist der Faserziehprozess kein Verhältniszug, so dass bei der Auslegung der Vorform nicht auf Verhältnis der jeweiligen Radien von Kern und Mantel von Vorform und Kapillare abgestellt wird, sondern auf das Verhältnis der CSA-Bereiche. Die Anforderungen an die Geometrie der Vorform sind dadurch deutlich geringer. Denn es wird eine Vorform hergestellt, deren CSA-Wert dem des Kapillarrohres entspricht, für den Fall, dass diese den vorgegebenen Durchmesser der Kapillarbohrung aufweist.

Wie gesagt, wird in der Vorform nicht das Radienverhältnis von Kern und Mantelbereich auf den Zielwert der Kapillare gebracht, sondern vielmehr das Querschnittsverhältnis der jeweiligen CSA Bereiche, indem der Zielwert bereits in der Vorform eingestellt wird.

Beim Ziehen des Kapillarstrangs wird die Kapillarbohrung durch Schrumpfen unter maßgeblicher Einwirkung der Oberflächenspannung auf den gewünschten Innendurchmesser kollabiert. Sobald das entsprechende vorgegebene Verhältnis von Außendurchmesser zu Innendurchmesser im Kapillarstrang erreicht ist, ist automatisch auch der vorgegebene CSA-Wert erreicht.

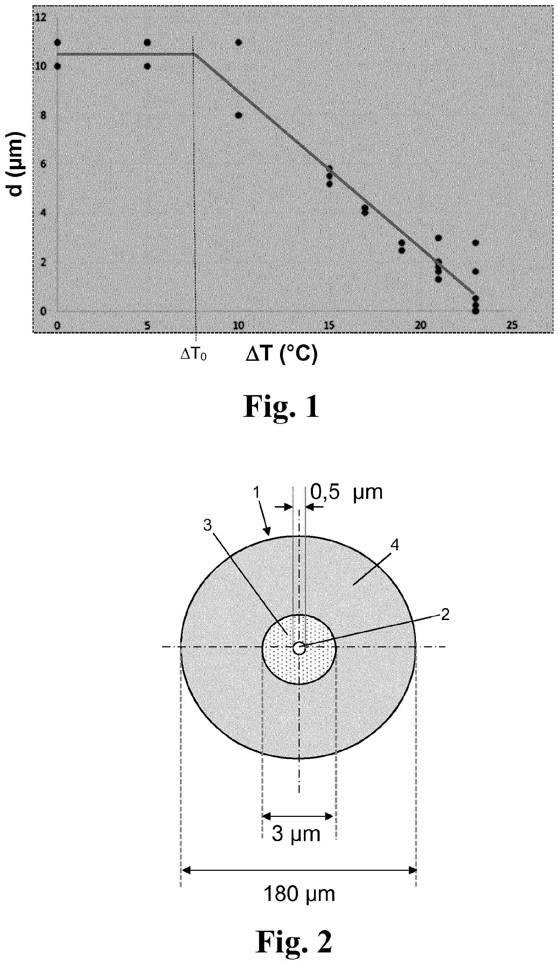

Anhand des Diagramms von **Figur 1** wird zunächst am Beispiel einer Vorversuchsreihe mit einer Vorformcharge die bevorzugte Vorgehensweise zur Ermittlung der Ziehtemperatur $T_{draw}$ beim Ziehen des Kapillarstrangs erläutert. Auf der y-Achse ist der Durchmesser d der Kapillarbohrung 2 (in μm) gegen eine Temperaturerhöhung $\Delta T$ (in °C) ausgehend von einem vorab gewählten Startwert der Ziehtemperatur aufgetragen.

Das Diagramm zeigt, dass sich der Kapillarbohrungs-Durchmesser d ausgehend von einem Wert von 10 μm bei einer Temperaturerhöhung von weniger als etwa 7 °C über dem Startwert ($\Delta T=0$) zunächst nicht oder kaum verändert. Der Kapillarbohrungs-Durchmesser d stellt sich in diesem Parameterbereich - wie in einem Verhältniszug üblich - maßgeblich auf Basis von Vorschubgeschwindigkeit und Ziehgeschwindigkeit ein. Erst ab einer gewissen Tempera-turerhöhung $\Delta T_0$, die bei dieser Versuchsreihe bei etwa 7 °Celsius liegt, ergibt sich eine nennenswerte Verkleinerung der Kapillarbohrung, die mit der weiteren Ziehtemperatur-Erhöhung fast perfekt skaliert. Es zeigt sich, dass die Abhängigkeit des Durchmessers von der Ziehtemperatur sehr sensibel und eine Funktion der thermischen Last beziehungsweise der Wärmekapazität und -leitung der Vorform ist. Die Abweichungen der Messpunkte sind im Wesentlichen auf Schwankungen der Wärmeleitfähigkeit und -kapazität der jeweiligen Vorform innerhalb der Charge, insbesondere auf geringfügig unterschiedliche Außendurchmesser der jeweiligen Vorform zurückzuführen. Sie können vermieden werden, indem jede Vorform einer Charge vorab auf ein vorgegebenes Längen- und Durchmessermaß geschliffen wird.

Das Einstellen des gewünschten Einwirkungsgrades der Oberflächenspannung beim Ziehprozess erfolgt anhand einer iterativen Verfahrensweise durch vorsichtiges Erhöhen der Zieh-Temperatur, bis die optimale Ziehtemperatur $T_{draw}$ erreicht ist. Zum Auffinden der optimalen Ziehtemperatur werden während des Faserziehprozesses Proben genommen, um den aktuellen Durchmesser der Kapillarbohrung zu prüfen und gegebenenfalls nachzuregeln. Der Durchmesser der Kapillarbohrung wird im Folgenden kurz als "Innendurchmesser" bezeichnet. Die Probennahme, etwa durch ein Rasterelektronenmikroskop, erlaubt es, die Einstellung zu kontrollieren und die Ziehtemperatur (genauer: die Ofentemperatur) beispielsweise in Schritten von jeweils 0,5 °C so lange zu erhöhen, bis der Innendurchmesser im weiteren Faserziehprozess mit dementsprechend angepasster Ziehtemperatur auf den gewünschten Wert kollabiert.

Das iterative Herantasten erfordert einen anfänglich zu großen Innendurchmesser durch ein "zu kaltes Ziehen". Wie das Diagramm von Figur 1 zeigt, ist das weitere Kollabieren des Innendurchmessers ab $\Delta T_0$ eine lineare Funktion der Erhöhung der Ziehtemperatur. Ist der Innendurchmesser hingegen bereits vollständig kollabiert, weil beispielsweise die anfängliche Ziehtemperatur zu hoch gewählt worden ist, kann die Anpassung anhand des linearen Zusammenhang von Figur 1 nicht erfolgen, so dass der Faserziehprozess mit einer geringeren anfänglichen Ziehtemperatur zu wiederholen ist.

Es hat sich gezeigt, dass beim erläuterten iterativen Einstellprozess bereits Temperaturunterschiede im Bereich weniger Grade einen merklichen Einfluss auf den Durchmesser der Kapillarbohrung haben. Mittels des iterativen Einstellprozesses ist die optimale Ziehtemperatur für jede Vorform unter Beibehaltung der übrigen Zieh-Parameter auffindbar.

Bei Anwendung der optimalen Ziehtemperatur im weiteren Faserziehprozess schrumpft der Innendurchmesser unter der maßgeblichen Wirkung der Oberflächenspannung und lässt sich auf seinen Sollwert mit einer Abweichung von +/-50 nm stabilisieren.

**Figur 2** zeigt schematisch eine Draufsicht auf die Stirnseite einer Kapillare 1 mit der Kapillarbohrung 2. Die Kapillare 1 ist als Singlemode-Faser für die Lichtführung ausgelegt. Sie verfügt über einen Kern 3 und einen den Kern 3 umgebenden Mantel 4, wobei der Brechungsindex des Kerns 3 höher ist als der Brechungsindex des Mantels 4, so dass das Laserlicht durch Totalreflexion im Wesentlichen im Kern 3 geführt wird.

Die Kapillare 1 hat einen Außendurchmesser $d_{OD}$ von 180 $\mu$m. Der Kern 3 hat einen Durchmesser von 3 $\mu$m, und der Durchmesser $d_{ID}$ der Kapillarbohrung 2 beträgt 0,5 $\mu$m, Das Durchmesserverhältnis $d_{rel}$ beträgt somit 180 $\mu$m / 0,5 $\mu$m = 360 und das Querschnittsverhältnis der CSA-Werte von Mantel und Kern der Kapillare beträgt 25.439,8 $\mu m^2$ / 6,9 $\mu m^2$ = 3.687. Figur 2 ist aus Darstellungsgründen nicht maßstabsgetreu. Die Kapillarbohrung 2, der Kern 3 und der Mantel 4 verlaufen koaxial um die Kapillar-Mittelachse.

Der Mantel 4 besteht aus synthetisch erzeugtem, undotiertem Quarzglas mit einem Brechungsindex von 1,4607. Dieser Wert beruht auf einer Messung mit einer Lichtwellenlänge von 532 nm und einer Messtemperatur von 20 °C. Diese Messbedingungen liegen auch den im Folgenden genannten Brechungsindex-Werten zugrunde. Der Kern 3 besteht aus Quarzglas, das mit Germanium dotiert ist. Der Unterschied der Brechungsindizes der Quarzgläser von Kern 3 und Mantel 4 beträgt 0,008.

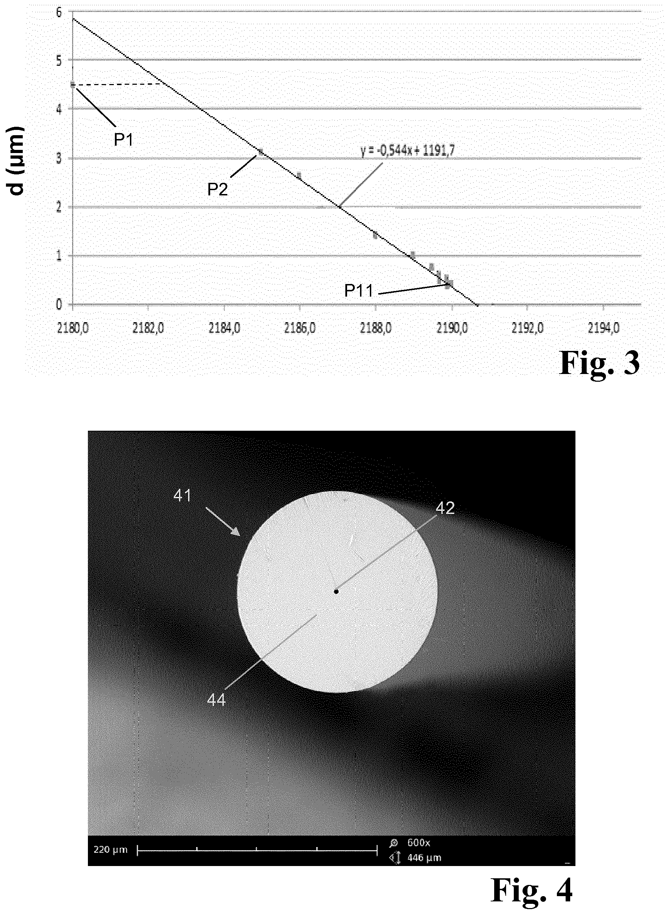

Nachfolgend wird anhand der Figuren 3 bis 6 eine beispielhafte Verfahrensweise zur Herstellung des schematisch in Figur 2 gezeigten Kapillarrohres 1 näher erläutert.

Das Kapillarrohr 1 wird aus einer Vorform mit folgenden Abmessungen gezogen:

| | |
|---|---|
| Außendurchmesser $D_{OD}$ > | 28,000 mm |
| Innendurchmesser $D_{ID}$ > | 2,052 mm |
| Durchmesserverhältnis $D_{rel}$ | 13,644 |
| Kerndurchmesser: | 2,102 mm |
| CSA-Verhältnis | 3.749 |

Da der Innendurchmesser beim Faserziehprozess stärker schrumpft als dies bei einem reinen Verhältniszug der Fall wäre, vergrößert sich das Durchmesserverhältnis $d_{rel}$ des Kapillarstrangs im Vergleich zu dem der Vorform im Ausführungsbeispiel etwa um den Faktor 27.

Der Faserziehprozess für die Vorform ist durch folgende Start-Parameter charakterisiert:

| | |
|---|---|
| Ziehtemperatur $T_{draw}$ | etwa 2190 °C |
| Ziehgeschwindigkeit $v_{draw}$ | 30 m/min |
| Vorschubgeschwindigkeit | 1,53 mm/min |

Als Ziehtemperatur ist dabei die Temperatur der Wandung des ringförmigen Ziehofens angegeben, der die Vorform und den daraus gezogenen Kapillarstrang beim Faserziehprozess koaxial umgibt. Der Ziehofen hat einen kreisrunden Heiz-Innenraum mit einer Heizlänge von 15 cm.

Zu Beginn des Faserziehprozesses wird mit den oben genannten Start-Parametern gefahren, die gewährleisten, dass das Kollabieren noch nicht hinreichend stattfindet und der Innendurchmesser zu groß ausfällt.

Während des Faserziehprozesses wurden laufend Proben aus dem Kapillarstrang entnommen und die aktuellen radialen Abmessungen wurden mikroskopisch ermittelt.

Das Diagramm von **Figur 3** zeigt die Entwicklung des Kapillar-Innendurchmessers d (in $\mu$m) in Abhängigkeit von der jeweiligen Ziehtemperatur $T_{draw}$ (in °C). Die Nanolochfaser 41 mit den Abmessungen der **Figur 4** entspricht dem Messpunkt P1 bei der Ziehtemperatur von 2.180 °C. Ausgehend von P1 wurde die Ziehtemperatur $T_{draw}$ , also die Temperatur des Faserziehofens sukzessive erhöht, um ein Schrumpfen des Kapillar-Durchmessers beim Faserziehen zu bewirken. Aus dem Diagramm ist zu entnehmen, dass beim Messpunkt P2 mit einer Temperaturerhöhung um 5 Grad auf eine Ziehtemperatur von 2185 °C ein Schrumpfen der Kapillare (Nanolochfaser 41) eingesetzt hat. Der Messpunkt P2 liegt ebenso wie der letzte Messpunkt P11 der Messreihe auf einer Geraden, deren Geradengleichung in Figur 3 angegeben ist. Beim Messpunkt P11 hat die Nanolochfaser 41 ihren Soll-Innendurchmesser erreicht.

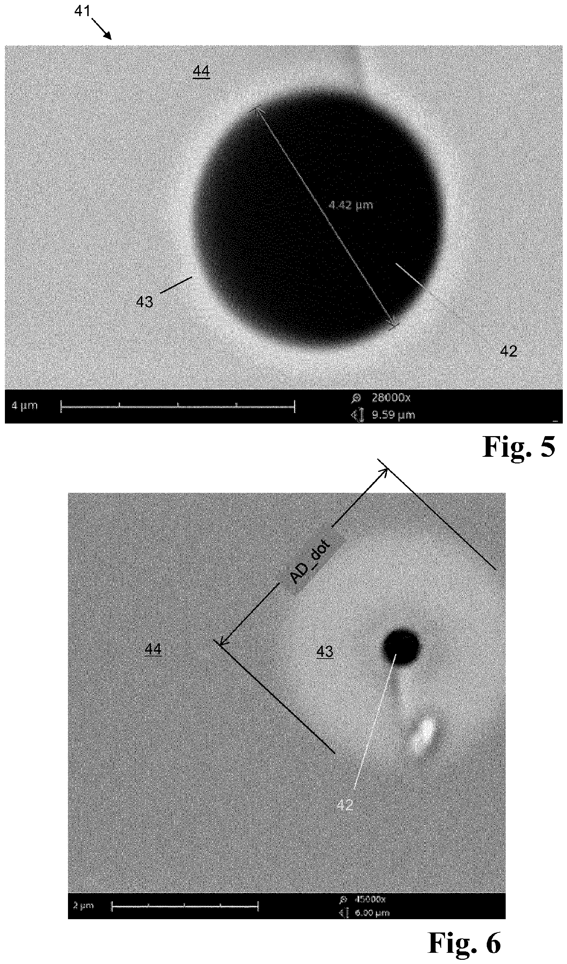

Die rasterelektronenmikroskopischen Aufnahmen der Figuren 4 bis 6 illustrieren diese Vorgehensweise. Die **Figuren 4 und 5** zeigen die sogenannte "Nanolochfaser" 41 im Anfangsstadium des Faserziehprozesses. Die Nanolochfaser 41 hat eine Kapillarbohrung 42 mit einem Soll-Innendurchmesser "ID" von 500 nm, die von einem Kernbereich aus Ge-dotiertem Quarzglas umgeben ist. Das übrige Kapillarmaterial (der Mantel 44) besteht aus undotiertem Quarzglas. Im Gegensatz zum Soll-Außendurchmesser von 180 $\mu$m, der in diesem Verfahrensstadium bereits erreicht ist, ist der Innendurchmesser der Kapillarbohrung 42 mit 4,42 $\mu$m (Figur 5) noch viel zu groß.

Die Nanolochfaser 41 wird durch Elongieren einer Vorform hergestellt, bei der das CSA-Verhältnis von dotiertem zu undotiertem Bereich bereits dem gewünschten Verhältnis in der Nanolochfaser 41 entspricht, sofern der Soll-Innendurchmesser von 500 nm erreicht ist. Der Kernbereich (43) ist in diesem Anfangsstadium des Faserziehprozesses, in dem die Anpassung der Kapillarbohrung 42 mit Innendurchmesser ID durch Schrumpfung noch nicht eingesetzt hat jedoch noch sehr schmal und in der Figur 4 nicht zu erkennen.

**Figur 5** zeigt dieselbe Nanolochfaser 41 in höherer Vergrößerung. Neben der Kapillarbohrung 42 mit einem Innendurchmesser ID von 4,42 $\mu$m ist nun auch der dotierte Kernbereich 43 als heller Ring erkennbar (der Kernbereich 43 ist auch bereits in Figur 4 vorhanden, dort allerdings zu schmal, um sichtbar zu sein).

**Figur 6** zeigt die zum Messpunkt P11 gehörende Nanolochfaser 41. Zwischenzeitlich wurde die Ofentemperatur des Ziehofens schrittweise um insgesamt 9,7 °C gegenüber dem Messpunkt P1 erhöht, um den Einfluss der Oberflächenspannung zu erhöhen, und unter deren Einwirkung den Innendurchmesser der Kapillarbohrung 42 weiter zu verringern. Er ist nun auf den Soll-Innendurchmesser von etwa 500 nm gebracht. Das Verhältnis von Außendurchmesser AD des Mantels 44 zum Außendurchmesser AD_dot des Kernbereichs 43 und das Verhältnis von Außendurchmesser AD des Mantels 44 zum Durchmesser ID der Kapillarbohrung 42 ist nun, nach vollständigem Kollabieren der Bohrung 42 auf den Zielwert, entsprechend den Vorgaben eingestellt.

Die folgende Tabelle zeigt Ergebnisse weiterer Versuchsreihen, bei denen aus Vorformen Kapillaren mit unterschiedlichem Durchmesser der Kapillarbohrung gezogen worden sind.

**Tabelle**

| Preform | | | | | |
|---|---|---|---|---|---|
| Außendurchmesser DOD [mm] | 30,000 | 40,000 | 40,000 | 40,000 | 30,000 |
| Innendurchmesser DID [mm] | 2,970 | 3,740 | 2,581 | 2,578 | 1,675 |
| Durchmesserverhältnis Drel | 10,101 | 10,694 | 15,501 | 15,515 | 17,908 |
| Kerndurchmesser: | 3,102 | 3,906 | 2,597 | 2,597 | 1,691 |
| Durchmesserverhältnis Kern/Mantel | 9,673 | 10,241 | 15,405 | 15,405 | 17,738 |
| CSA-Verhältnis (Kern/Mantel) | 1115,636 | 1251,971 | 19145,156 | 16600,398 | 16544,139 |
| **Faser** | | | | | |
| Außendurchmesser dOD [$\mu$m] | 100,00 | 100,00 | 400,00 | 400,00 | 400,00 |
| Innendurchmesser dID [$\mu$m] | 0,100 | 1,000 | 1,000 | 0,100 | 0,100 |
| Durchmesserverhältnis drel | 1000,000 | 100,005 | 400,001 | 4000,000 | 4000,000 |
| Kerndurchmesser: | 2,994 | 2,997 | 3,059 | 3,106 | 3,111 |
| Durchmesserverhältnis Kern/Mantel | 33,397 | 33,370 | 130,767 | 128,780 | 128,561 |
| CSA-Verhältnis (Kern/Mantel) | 1115,636 | 1251,971 | 19145,156 | 16600,398 | 16544,139 |
| **Verhältnis (Preform/Faser bzw. Faser/Preform)** | | | | | |
| P/F: Außendurchmesser DOD/dOD | 300,000 | 399,980 | 100,000 | 100,000 | 75,000 |
| P/F: Innendurchmesser DID/dID | 29700,923 | 3740,465 | 2580,553 | 25780,803 | 16752,055 |
| F/P: Durchmesserverhältnis drel/Drel | 99,003 | 9,352 | 25,806 | 257,808 | 223,361 |
| P/F: Kerndurchmesserverhältnis | 1.035,835 | 1.303,376 | 848,881 | 835,982 | 543,594 |

(fortgesetzt)

| Verhältnis (Preform/Faser bzw. Faser/Preform) | | | | | |
|---|---|---|---|---|---|
| F/P: Durchmesserverhältnis Kern/Mantel | 3,453 | 3,259 | 8,489 | 8,360 | 7,248 |
| P/F: CSA-Verhältnis (Kern/Mantel) | 1000,000 | 1000,000 | 1000,000 | 1000,000 | 1000,000 |

**Patentansprüche**

1.  Verfahren zur Herstellung eines Kapillarrohres (1; 41) aus Glas, umfassend einen Verfahrensschritt, bei dem eine rohrförmige Vorform mit einem Außendurchmesser $D_{OD}$, einem Innendurchmesser $D_{ID}$ und einem Durchmesserverhältnis $D_{rel}$ - mit $D_{rel} = D_{OD}/D_{ID}$ - in einer auf eine Zieh-Temperatur $T_{draw}$ aufgeheizten Heizzone zonenweise erweicht und aus dem erweichten Bereich mit einer Ziehgeschwindigkeit $v_{draw}$ kontinuierlich ein Kapillarstrang (1; 41) mit einem Außendurchmesser $d_{OD}$, einem Innendurchmesser $d_{ID}$ und einem Durchmesserverhältnis $d_{rel}$ - mit $d_{rel} = d_{OD}/d_{ID}$ - abgezogen und daraus das Kapillarrohr (1; 41) abgelängt wird, **dadurch gekennzeichnet, dass** die Kapillarbohrung (2; 42) in der Heizzone einem auf Einwirkung von Zieh-Temperatur $T_{draw}$ und Oberflächenspannung basierenden Schrumpfungsvorgang unterzogen wird, derart, dass sich das Durchmesserverhältnis $d_{rel}$ des Kapillarstrangs (1; 41) auf einen Wert einstellt, der um mindestens den Faktor 5 größer ist das Durchmesserverhältnis $D_{rel}$ der Vorform, und wobei als Vorform eine Multimode-Lichtleitfaservorform oder eine Singlemode-Lichtleitfaservorform mit einem eine Innenbohrung umgebenden Vorformkern und einem den Vorformkern umhüllenden Vorformmantel eingesetzt wird, und daraus ein Kapillarstrang (1; 41) gezogen wird, der einen eine Kapillarbohrung (2; 42) umgebenden Kapillarkern (3; 43) und einen den Kapillarkern (3; 43) umhüllenden Kapillarmantel (4; 44) aufweist.

2.  Verfahren nach Anspruch 1, **dadurch gekennzeichnet, dass** die den Schrumpfungsvorgang bewirkende Zieh-Temperatur $T_{draw}$ in einem iterativen Prozess ermittelt wird, der folgende Verfahrensschritte umfasst:

    (a) Die Heizzone wird auf eine Temperatur $T_1$ aufgeheizt, wobei gilt:

    $$T_1 < T_{draw}.$$

    (b) Mit der auf Temperatur $T_1$ aufgeheizten Heizzone wird ein Kapillar-Teilstrang gezogen.
    (c) Der Durchmesser der Kapillarbohrung des Kapillar-Teilstrangs wird ermittelt und es wird sichergestellt, dass er größer ist als ein Soll-Innendurchmesser der Kapillarbohrung.
    (d) Die Temperatur der Heizzone wird von $T_1$ auf eine Zieh-Temperatur $T_2$ erhöht, und mit der auf die Zieh-Temperatur $T_2$ aufgeheizten Heizzone wird ein weiterer Kapillar-Teilstrang gezogen.
    (e) Der Durchmesser der Kapillarbohrung des weiteren Kapillar-Teilstrangs wird ermittelt und es wird festgestellt, ob der Durchmesser innerhalb eines tolerierbaren Schwankungsbereichs um den Soll-Innendurchmesser liegt.
    (f) Liegt der Durchmesser der Kapillarbohrung innerhalb des Schwankungsbereichs um den Soll-Innendurchmesser, so gilt: $T_2 = T_{draw}$; ist der Durchmesser der Kapillarbohrung größer als der Soll-Innendurchmesser inklusive des tolerierbaren Schwankungsbereichs, so gilt: $T_{2<}T_{draw}$ und der iterative Prozess wird mit der Maßgabe $T_{1=}T_2$ bei Verfahrensschritt (d) fortgeführt; ist der Durchmesser der Kapillarbohrung kleiner als der Soll-Innendurchmesser inklusive des Schwankungsbereichs, so gilt: $T_{2>}T_{draw}$ und der iterative Prozess wird bei Verfahrensschritt (a) fortgeführt.

3.  Verfahren nach Anspruch 2, **dadurch gekennzeichnet, dass** bei den Verfahrensschritten (c) und (e) das Ermitteln des Durchmessers der Kapillarbohrung (2; 42) während des Ziehens des Kapillarstrangs (1; 41) beziehungsweise während des Ziehens des weiteren Kapillarstrangs erfolgt.

4.  Verfahren nach einem der vorhergehenden Ansprüche, **dadurch gekennzeichnet, dass** die Ziehgeschwindigkeit $v_{draw}$ im Bereich von 5 bis 100 m/min eingestellt wird.

5.  Verfahren nach einem der vorhergehenden Ansprüche, **dadurch gekennzeichnet, dass** der Kapillarstrang (1; 41) mit einem Elongierverhältnis im Bereich von 900 bis 200.000 abgezogen wird.

6.  Verfahren nach einem der vorhergehenden Ansprüche, **dadurch gekennzeichnet, dass** für die Vorform und für den Kapillarstrang (1; 41) gelten:

$$D_{OD} \quad > \quad 15\,mm$$

$$D_{ID} \quad > \quad 1\,mm$$

$$D_{rel} \quad < \quad 30$$

$$d_{OD} \quad > \quad 100\,\mu m$$

$$d_{ID} \quad < \quad 1\,\mu m$$

$$d_{rel} \quad > \quad 100$$

7. Verfahren nach einem der vorhergehenden Ansprüche, **dadurch gekennzeichnet, dass** für den Kapillarstrang (1; 41) gilt:

$$100\,\mu m \quad < \quad d_{OD} \quad < \quad 500\,\mu m,$$

$$0{,}1\,\mu m \quad < \quad d_{ID} \quad < \quad 1\,\mu m$$

und

$$100 \quad < \quad d_{rel} \quad < \quad 5000.$$

8. Verfahren nach einem der vorhergehenden Ansprüche, **dadurch gekennzeichnet, dass** für die Vorform gilt:

$$15\,mm \quad < \quad D_{OD} \quad < \quad 45\,mm,$$

$$1.000\,\mu m \quad < \quad D_{ID} \quad < \quad 5.000\,\mu m$$

und

$$3 \quad < \quad D_{rel} \quad < \quad 30.$$

9. Verfahren nach einem der vorhergehenden Ansprüche, **dadurch gekennzeichnet, dass** für Vorform und Kapillarstrang (1; 41) gilt:

$$2.000 \quad < \quad D_{ID}/d_{ID} \quad < \quad 50.000$$

$$d_{rel}/D_{rel} \quad > \quad 10,\ \text{bevorzugt} > 20,\ \text{insbesondere} > 50$$

und

$$d_{rel}/D_{rel} \quad < \quad 300.$$

10. Verfahren nach einem der vorhergehenden Ansprüche, **dadurch gekennzeichnet, dass** die Heizzone in einem Rohrofen ausgebildet ist, der einen kreisrunden Heiz-Innenraum aufweist.

11. Verfahren nach Anspruch 1, **dadurch gekennzeichnet, dass** der Kapillarkern (3; 43) eine radiale Querschnittsfläche $CSA_{KK}$ und der Kapillarmantel (4; 44) eine radiale Querschnittsfläche $CSA_{KM}$ aufweist, wobei eine Vorform eingesetzt wird, bei der der Vorformkern eine radiale Querschnittsfläche $CSA_{VK}$ und der Vorformmantel eine radiale Querschnittsfläche $CSA_{VM}$ aufweist, wobei für die jeweiligen Querschnittsflächenverhältnisse von Mantel und Kern gilt: $CSA_{KM}/CSA_{KK} = CSA_{VM}/CSA_{VK}$.

**Claims**

1. A method of producing a capillary tube (1; 41) from glass, comprising a method step in which a tubular preform having an outer diameter $D_{OD}$, an inner diameter $D_{ID}$ and a diameter ratio $D_{rel}$ - with $D_{rel} = D_{OD}/D_{ID}$ - is softened zonally in a heating zone heated to a drawing temperature $T_{draw}$, and a capillary strand (1; 41) having an outer diameter $d_{OD}$, an inner diameter $d_{ID}$ and a diameter ratio $d_{rel}$ - with $d_{rel} = d_{OD}/d_{ID}$ - is drawn off continuously from the softened region at a draw speed $v_{draw}$, and the capillary tube (1; 41) is cut to length therefrom, **characterized in that** the capillary bore (2; 42) is subjected in the heating zone to a shrinkage process based on the action of drawing temperature $T_{draw}$ and surface tension in such a way that the diameter ratio $d_{rel}$ of the capillary strand (1; 41) is adjusted to a value greater than the diameter ratio $D_{rel}$ of the preform by at least a factor of 5, and wherein a multimode optical fiber preform or a single-mode optical fiber preform with a preform core surrounding an inner bore and a preform cladding covering the preform core is employed as the preform, and a capillary strand (1; 41) is drawn therefrom having a capillary core (3; 43) surrounding a capillary bore (2; 42) and a capillary cladding (4; 44) covering the capillary core (3; 43).

2. The method according to claim 1, **characterized in that** the drawing temperature $T_{draw}$ causing the shrinkage process is determined in an iterative process comprising the following method steps:

   (a) The heating zone is heated to a temperature $T_1$, wherein $T_1 < T_{draw}$ applies.
   (b) With the heating zone heated to the temperature $T_1$, a partial capillary strand is drawn.
   (c) The capillary bore diameter of the partial capillary strand is determined and it is ensured that this is greater than a nominal inner diameter of the capillary bore.
   (d) The temperature of the heating zone is raised from $T_1$ to a drawing temperature $T_2$, and with the heating zone heated to the drawing temperature $T_2$ a further partial capillary strand is drawn.
   (e) The capillary bore diameter of the further partial capillary strand is determined and it is established whether the diameter lies within an acceptable fluctuation range of the nominal inner diameter.
   (f) If the capillary bore diameter lies within the fluctuation range of the nominal inner diameter, $T_2 = T_{draw}$ applies; if the capillary bore diameter is greater than the nominal inner diameter, including the acceptable fluctuation range, $T_{2<}T_{draw}$ applies and the iterative process is continued in method step (d) with the proviso that $T_{1=}T_2$; if the capillary bore diameter is less than the nominal inner diameter including the fluctuation range, $T_{2>}T_{draw}$ applies and the iterative process is continued in method step (a).

3. The method according to claim 2, **characterized in that**, in the method steps (c) and (e), the determination of the diameter of the capillary bore (2; 42) takes place during the drawing of the capillary strand (1; 41) or during the drawing of the further capillary strand, as applicable.

4. The method according to one of the preceding claims, **characterized in that** the draw speed $v_{draw}$ is adjusted to be in the range of 5 to 100 m/min.

5. The method according to one of the preceding claims, **characterized in that** the capillary strand (1; 41) is drawn off with an elongation ratio in the range of 900 to 200,000.

6. The method according to one of the preceding claims, **characterized in that** the following apply to the preform and to the capillary strand (1; 41):

$$D_{OD} \quad > \quad 15\,\text{mm}$$

$$D_{ID} > 1 \text{ mm}$$

$$D_{rel} < 30$$

$$d_{OD} > 100 \text{ μm}$$

$$d_{ID} < 1 \text{ μm}$$

$$d_{rel} > 100$$

7. The method according to one of the preceding claims, **characterized in that** the following applies to the capillary strand (1; 41):

$$100 \text{ μm} < d_{OD} < 500 \text{ μm,}$$

$$0.1 \text{ μm} < d_{ID} < 1 \text{ μm}$$

and

$$100 < d_{rel} < 5000.$$

8. The method according to one of the preceding claims, **characterized in that** the following applies to the preform:

$$15 \text{ mm} < D_{OD} < 45 \text{ mm,}$$

$$1,000 \text{ μm} < D_{ID} < 5,000 \text{ μm}$$

and

$$3 < D_{rel} < 30.$$

9. The method according to one of the preceding claims, **characterized in that** the following applies to preform and capillary strand (1; 41):

$$2,000 < D_{ID}/d_{ID} < 50,000$$

$$d_{rel}/D_{rel} > 10, \text{ preferably} > 20, \text{ in particular} > 50$$

and

$$d_{rel}/D_{rel} < 300.$$

10. The method according to one of the preceding claims, **characterized in that** the heating zone is formed in a tube furnace having a circular inner heating chamber.

**11.** The method according to claim 1, **characterized in that** the capillary core (3; 43) has a cross-sectional area $CSA_{KK}$ and the capillary cladding (4; 44) has a cross-sectional area $CSA_{KM}$, wherein a preform is employed in which the preform core has a cross-sectional area $CSA_{VK}$ and the preform cladding has a cross-sectional area $CSA_{VM}$, wherein the following applies to the respective cross-sectional area ratios of cladding and core: $CSA_{KM}/CSA_{KK}$ = $CSA_{VM}/CSA_{VK}$.

**Revendications**

**1.** Procédé de fabrication d'un tube capillaire (1 ; 41) en verre, comprenant une étape de procédé selon laquelle une préforme tubulaire dotée d'un diamètre extérieur $D_{OD}$, d'un diamètre intérieur $D_{ID}$ et d'un rapport de diamètre $D_{rel}$ - où $D_{rel} = D_{OD}/D_{ID}$ - est ramollie par zones dans une zone de chauffage chauffée à une température d'étirage Tdraw et un barreau de verre (1 ; 41), doté d'un diamètre extérieur $d_{OD}$, d'un diamètre intérieur $d_{ID}$ et d'un rapport de diamètre $d_{rel}$ - où $d_{rel} = d_{OD}/d_{ID}$ - est extrait en continu depuis la partie ramollie à une vitesse d'étirage $V_{draw}$ et le tube capillaire (1 ; 41) est sectionné de celui-ci, **caractérisé en ce que** l'alésage capillaire (2 ; 42) est soumis, dans la zone de chauffage, à un phénomène de resserrement basé sur l'action de la température d'étirage $T_{draw}$ et de la tension superficielle, de telle manière que le rapport de diamètre $d_{rel}$ du barreau capillaire (1 ; 41) se règle sur une valeur qui est supérieure au moins par le facteur 5 au rapport de diamètre $D_{rel}$ de la préforme, et une préforme de fibre de guide d'ondes optiques multimode ou une préforme de fibre de guide d'ondes optiques monomode avec une âme de préforme entourant un alésage intérieur et une gaine de préforme enveloppant l'âme de préforme étant utilisée en guise de préforme, et un barreau capillaire (1 ; 41), qui comporte une âme capillaire (3 ; 43) entourant un alésage capillaire (2 ; 42) et une gaine capillaire (4 ; 44) enveloppant l'âme capillaire (3 ; 43), étant étiré à partir de celle-ci.

**2.** Procédé selon la revendication 1, **caractérisé en ce que** la température d'étirage $T_{draw}$ provoquant le phénomène de resserrement est déterminée selon un processus itératif, qui comprend les étapes de procédé suivantes :

(a) la zone de chauffage est chauffée à une température $T_1$, où on a :

$$T_1 < T_{draw},$$

(b) avec la zone de chauffage chauffée à la température $T_1$, un barreau partiel capillaire est étiré,
(c) le diamètre de l'alésage capillaire du barreau partiel capillaire est déterminé et on s'assure qu'il est supérieur à une consigne de diamètre intérieur de l'alésage capillaire,
(d) la température de la zone de chauffage est augmentée de $T_1$ à une température d'étirage $T_2$, et avec la zone de chauffage chauffée à la température d'étirage $T_2$, un autre barreau partiel capillaire est étiré,
(e) le diamètre de l'alésage capillaire de l'autre barreau partiel capillaire est déterminé et on détermine si le diamètre est compris dans une plage de fluctuation tolérable autour de la consigne de diamètre intérieur,
(f) si le diamètre de l'alésage capillaire est compris dans la plage de fluctuation autour de la consigne de diamètre intérieur, alors on a : $T_2 = T_{draw}$ ; si le diamètre de l'alésage capillaire est supérieur à la consigne de diamètre intérieur y compris la plage de fluctuation tolérable, alors on a : $T_2 < T_{draw}$ et le processus itératif est poursuivi avec l'étape de procédé (d) avec la condition $T_1 = T_2$ ; si le diamètre de l'alésage capillaire est inférieur à la consigne de diamètre intérieur y compris la plage de fluctuation, alors on a : $T_2 > T_{draw}$ et le processus itératif est poursuivi avec l'étape (a).

**3.** Procédé selon la revendication 2, **caractérisé en ce que**, lors des étapes de procédé (c) et (e), la détermination du diamètre de l'alésage capillaire (2 ; 42) est effectuée pendant l'étirage du barreau capillaire (1 ; 41) ou pendant l'étirage de l'autre barreau capillaire.

**4.** Procédé selon l'une des revendications précédentes, **caractérisé en ce que** la vitesse d'étirage $V_{draw}$ est réglée dans la plage de 5 à 100 m/min.

**5.** Procédé selon l'une des revendications précédentes, **caractérisé en ce que** le barreau capillaire (1 ; 41) est étiré avec un rapport d'allongement compris dans la plage de 900 à 200 000.

**6.** Procédé selon l'une des revendications précédentes, **caractérisé en ce que**, pour la préforme et pour le barreau capillaire (1 ; 41), on a :

$$D_{OD} \quad > \quad 15 \text{ mm}$$

$$D_{ID} \quad > \quad 1 \text{ mm}$$

$$D_{rel} \quad < \quad 30$$

$$d_{OD} \quad > \quad 100 \text{ μm}$$

$$d_{ID} \quad < \quad 1 \text{ μm}$$

$$d_{rel} \quad > \quad 100.$$

**7.** Procédé selon l'une des revendications précédentes, **caractérisé en ce que**, pour le barreau capillaire (1 ; 41), on a :

$$100 \text{ μm} \quad < \quad d_{OD} \quad < \quad 500 \text{ μm,}$$

$$0{,}1 \text{ μm} \quad < \quad d_{ID} \quad < \quad 1 \text{ μm}$$

et

$$100 \quad < \quad d_{rel} \quad < \quad 5000.$$

**8.** Procédé selon l'une des revendications précédentes, **caractérisé en ce que**, pour la préforme, on a :

$$15 \text{ mm} \quad < \quad D_{OD} \quad < \quad 45 \text{ mm,}$$

$$1000 \text{ μm} \quad < \quad D_{ID} \quad < \quad 5000 \text{ μm}$$

et

$$3 \quad < \quad D_{rel} \quad < \quad 30.$$

**9.** Procédé selon l'une des revendications précédentes, **caractérisé en ce que**, pour la préforme et le barreau capillaire (1 ; 41), on a :

$$2000 \quad < \quad D_{ID}/d_{ID} \quad < \quad 50\,000$$

$$d_{rel}/D_{rel} \quad > \quad 10, \text{ de préférence } >20, \text{ en particulier } >50$$

et

$$d_{rel}/D_{rel} \quad < \quad 300.$$

**10.** Procédé selon l'une des revendications précédentes, **caractérisé en ce que** la zone de chauffage est réalisée dans un four tubulaire, qui comporte un espace intérieur de chauffage circulaire.

**11.** Procédé selon la revendication 1, **caractérisé en ce que** l'âme capillaire (3 ; 43) présente une aire de section radiale $CSA_{KK}$ et la gaine capillaire (4 ; 44) présente une aire de section radiale $CSA_{KM}$, une préforme étant utilisée pour laquelle l'âme de préforme présente une aire de section radiale $CSA_{VK}$ et la gaine de préforme présente une aire de section radiale $CSA_{VM}$, dans lequel on a, pour les rapports d'aire de section respectifs entre gaine et âme : $CSA_{KM}/CSA_{KK} = CSA_{VM}/CSA_{VK}$.

**Fig. 1**

**Fig. 2**

**Fig. 3**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 259877 A1
- DE 19856892 C2
- WO 2014141168 A1
- JP H08157227 A
- EP 1884808 A2
- JP H04342430 A
- JP H038733 A